# EUROPEAN PATENT APPLICATION

(11) **EP 2 843 564 A1**
(43) Date of publication of application: **04.03.2015**
(21) Application number: 14179098.0
(22) Date of filing: 30.07.2014
(51) Int. Cl.: G06F 13/42, H04B 3/32

(54) **Communication circuit and information processing device**

(30) Priority: 27.08.2013 JP 2013176026
(71) Applicant: FUJITSU LIMITED, Kawasaki-shi, Kanagawa 211-8588 (JP)
(72) Inventor: Nishiyama, Ryuichi, Kanagawa, 211-8588 (JP)
(74) Representative: Hoffmann Eitle

(57) **Abstract**

A communication circuit includes: a plurality of receiving units each configured to receive a serial signal over a transmission path from another device; a plurality of serial-to-parallel converters each configured to convert the received serial signal into a parallel signal; and a clock phase controller configured to send a clock phase control signal to any of the plurality of serial-to-parallel converters, wherein one of the serial-to-parallel converters that has received the clock phase control signal is configured to shift a phase of a parallel-signal clock signal that is to be used for a parallel signal obtained by conversion, so that a phase of a parallel signal to be obtained by conversion performed by the one of the serial-to-parallel converters is different from a phase of a parallel signal to be obtained by conversion performed by another one of the serial-to-parallel converters.

## Description

### FIELD

The embodiments discussed herein are related to a communication circuit and an information processing device.

### BACKGROUND

It is known that data is transmitted at different phases in a data transmission device that performs data transmission among a plurality of substrates. For example, a data transmission device includes a plurality of transmission paths for transmitting plural pieces of data, a plurality of latch units configured to latch plural pieces of data, respectively, and a delay unit configured to divide an operation clock of the latch unit into a plurality of operation clocks by shifting the phase of the operation clock of the latch unit. In this data transmission device, the latch unit is caused to operate with operation clocks having different phases obtained by the delay unit.

A data transfer scheme intended to communicate data values represented by states of a plurality of signal lines with respect to a change point of a clock signal is also known.

For example, a data transfer scheme is known in which a sending area and a receiving area are provided, and a plurality of signal lines are classified as one group and then data is sent and received simultaneously over a plurality of groups of signal lines, and in which change points of signals between groups are displaced by adjustment.

A serializer/deserializer (SerDes) for use in an input/output (I/O) unit of a semiconductor device or the like is also known. The SerDes includes a sender that converts a parallel signal to a serial signal and sends the serial signal, which is obtained by the conversion, over a transmission path to another device, and a receiver that converts a serial signal received over a transmission path from another device to a parallel signal. Furthermore, a SerDes including a plurality of lanes (also referred to as channels) each of which is made up of a pair of a sender and a receiver is known.

Japanese Laid-open Patent Publication No. 6-261029 and Japanese Laid-open Patent Publication No. 2006-33300 disclose the related art.

However, in a SerDes including a plurality of lanes, if processing operations of a plurality of lanes, such as serial-to-parallel conversion processing, are performed in synchronization with one another, the values of many signals vary simultaneously, and therefore there has been a possibility that simultaneous switching noise will occur.

### SUMMARY

In one aspect, it is an object of the present disclosure to provide a communication circuit and an information processing device in which, in a communication circuit including a plurality of serial-to-parallel conversion units, timings at which the plurality of serial-to-parallel conversion units perform serial-to-parallel conversion processing are different.

According to an aspect of the invention, a communication circuit includes: a plurality of receiving units each configured to receive a serial signal over a transmission path from another device; a plurality of serial-to-parallel converters each configured to convert the received serial signal into a parallel signal; and a clock phase controller configured to send a clock phase control signal to any of the plurality of serial-to-parallel converters, wherein one of the serial-to-parallel converters that has received the clock phase control signal is configured to shift a phase of a parallel-signal clock signal that is to be used for a parallel signal obtained by conversion, so that a phase of a parallel signal to be obtained by conversion performed by the one of the serial-to-parallel converters is different from a phase of a parallel signal to be obtained by conversion performed by another one of the serial-to-parallel converters.

### BRIEF DESCRIPTION OF DRAWINGS

FIG. 1 is a circuit block diagram of a semiconductor device equipped with a conventional SerDes;
FIG. 2 is an internal circuit block diagram of a lane of the SerDes illustrated in FIG. 1;
FIG. 3A is an internal circuit block diagram of a unit block of a 16:8 multiplexer;
FIG. 3B is an internal circuit block diagram of a 2:1 multiplexer;
FIG. 4A is an internal circuit block diagram of a 2:1 demultiplexer, and FIG. 4B is an internal circuit block diagram of a frequency divider circuit;
FIG. 5 is a circuit block diagram including wiring for clock signals of the SerDes illustrated in FIG. 1;
FIG. 6 is a diagram illustrating timing charts of clock signals of the SerDes illustrated in FIG. 1;
FIG. 7 is a circuit block diagram including wiring for clock signals of an example of a SerDes;
FIG. 8 is an internal circuit block diagram of a transmission frequency divider circuit of the SerDes illustrated in FIG. 7;
FIG. 9 is a diagram illustrating timing charts of clock signals of the SerDes illustrated in FIG. 7;
FIG. 10 is a circuit block diagram including wiring for clock signals of another example of the SerDes;
FIG. 11 is an internal circuit block diagram of a transmission frequency divider circuit of the SerDes illustrated in FIG. 10;
FIG. 12A is an internal circuit block diagram of a phase signal capture unit of the SerDes illustrated in FIG. 10;
FIG. 12B is an internal circuit block diagram of a phase signal comparison unit of the SerDes illustrated in FIG. 10; and
FIG. 13 is a diagram illustrating timing charts of clock signals of the SerDes illustrated in FIG. 10.

### DESCRIPTION OF EMBODIMENTS

Hereinafter, a communication circuit according to the present disclosure will be described with reference to the accompanying drawings. However, the technical scope of the present disclosure is not limited to embodiments thereof.

Prior to describing a communication circuit according to an embodiment, the problem of a conventional communication circuit will be described in more detail.

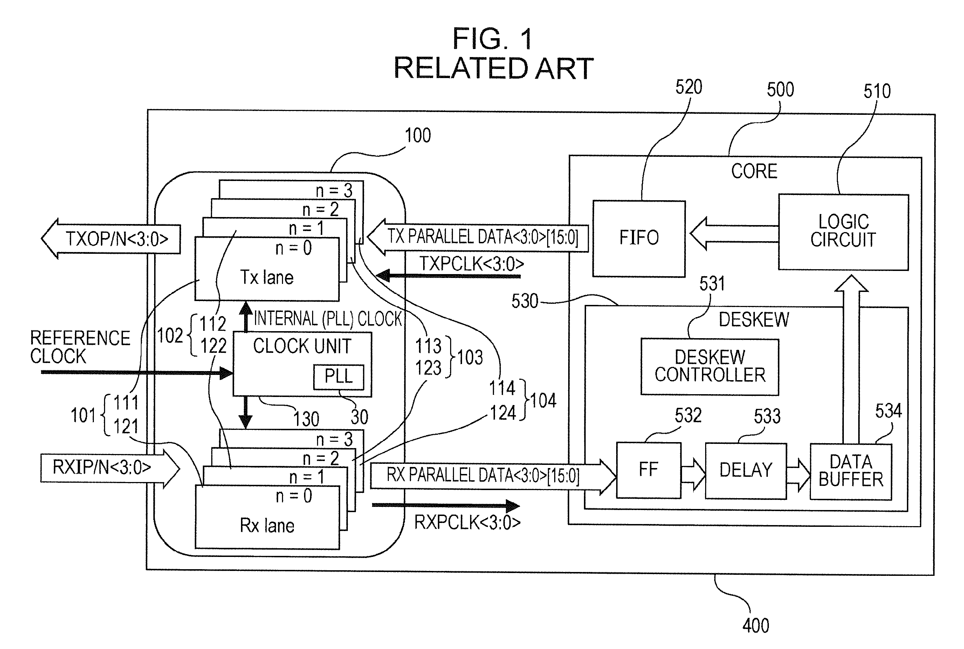

FIG. 1 is a circuit block diagram of a semiconductor device equipped with a conventional SerDes.

A semiconductor device 400 includes a SerDes 100 and a core 500.

The SerDes 100 includes first to fourth senders 111 to 114, first to fourth receivers 121 to 124, and a clock unit 130. The first sender 111 and the first receiver 121 form a first lane 101, and the second sender 112 and the second receiver 122 form a second lane 102. The third sender 113 and the third receiver 123 form a third lane 103, and the fourth sender 114 and the fourth receiver 124 form a fourth lane 102. The SerDes 100 includes four lanes, the first to fourth lanes 101 to 104.

Each of the first to forth senders 111 to 114 converts 16-bit parallel signals sent from the core 500 into serial signals and sends the serial signals over a transmission path TXOP/N<3:0> to another semiconductor device. Each of the first to fourth receivers 121 to 124 converts serial signals received over a transmission path RXIP/N<3:0> from another semiconductor device into 16-bit parallel signals and sends the parallel signals to the core 500. The clock unit 130 includes a phase locked loop (PLL) 30 and sends clock signals to the first to fourth senders 111 to 114 and the first to fourth receivers 121 to 124.

The core 500 includes a logic circuit unit 510, a first-in first-out (FIFO) 520, and a deskew circuit 530. In the FIFO 520, the clock signal for 16-bit signals, which are, respectively, to be sent to the first to fourth senders 111 to 114, is changed from a clock signal of the logic circuit unit 510 to a clock signal TXPCLK<3:0> for each of the first to fourth senders 111 to 114. In this process of changing a clock signal in the FIFO 520, there is a possibility that signals of a total of 64 bits to be sent to the first to fourth senders 111 to 114 will operate simultaneously.

The deskew circuit 530 includes a deskew controller 531, a receiving latch unit 532, a delay circuit unit 533, and a data buffering unit 534. The deskew controller 531 controls the delay circuit unit 533 so as to adjust delay differences of 16-bit parallel signals respectively sent from the first to fourth receivers 121 to 124. Adjustment by the deskew controller 531 is performed based on a clock signal RXPCLK<3:0> for each of the first to fourth receivers 121 to 124 and the clock signal of the logic circuit section 510. The receiving latch unit 532 latches a 16-bit parallel signal sent from each of the first to fourth receivers 121 to 124 with the clock signal RXPCLK<3:0> and sends the parallel signal to the delay circuit unit 533. The delay circuit unit 533 adds a delay to each 16-bit parallel signal based on a control signal from the deskew controller 531 so as to align phases of parallel signals of a total of 64 bits, and then synchronizes the parallel signals with the clock signal of the logic circuit unit 510. The delay circuit unit 533 sends parallel signals of 64 bits in synchronization with the clock signal of the logic circuit unit 510 to the data buffering unit 534. The data buffering unit 534 sends the received parallel signals of 64 bits to an internal circuit of the logic circuit unit 510.

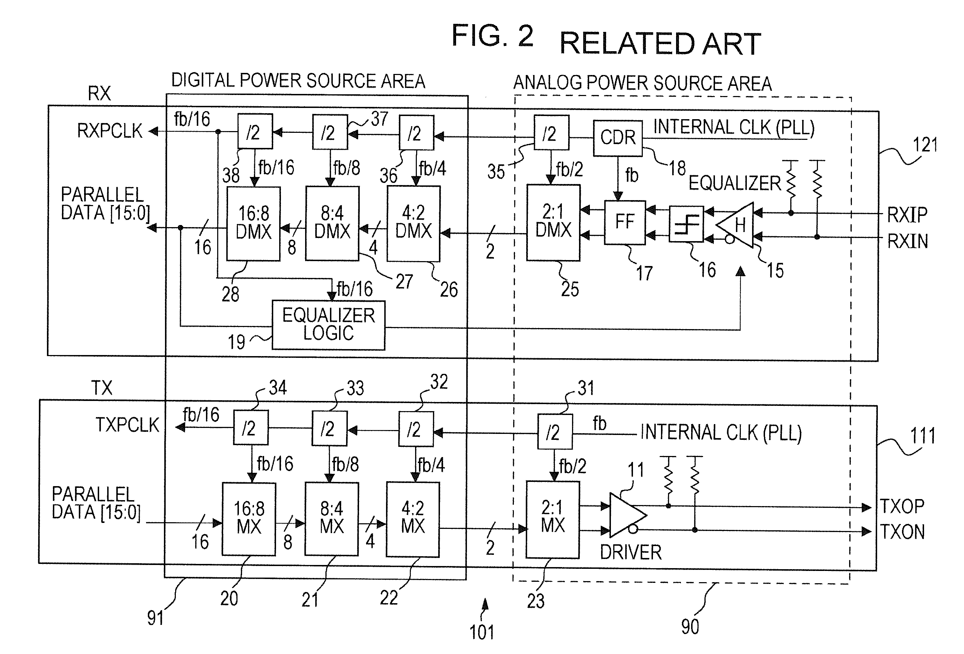

FIG. 2 is an internal circuit block diagram of the first lane 101.

The first lane 101 includes the first sender 111 and the first receiver 121. The first sender 111 includes a driving unit 11, a 16:8 multiplexer 20, an 8:4 multiplexer 21, a 4:2 multiplexer 22, and a 2:1 multiplexer 23. In addition, the first sender 111 includes a first transmission frequency divider circuit 31, a second transmission frequency divider circuit 32, a third transmission frequency divider circuit 33, and a fourth transmission frequency divider circuit 34.

The 16:8 multiplexer 20 converts 16-bit signals received from the core 500 into 8-bit signals in response to a clock signal output from the fourth transmission frequency divider circuit 34, and sends the 8-bit signals to the 8:4 multiplexer 21. The 8:4 multiplexer 21 converts the 8-bit signals received from the 16:8 multiplexer 20 into 4-bit signals in response to a clock signal output from the third transmission frequency divider circuit 33, and sends the 4-bit signals to the 4:2 multiplexer 22. The 4:2 multiplexer 22 converts the 4-bit signals received from the 8:4 multiplexer 21 into 2-bit signals in response to a clock signal output from the second transmission frequency divider circuit 32, and sends the 2-bit signals to the 2:1 multiplexer 23. The 2:1 multiplexer 23 converts the 2-bit signals received from the 4:2 multiplexer 22 into a 1-bit signal in response to a clock signal output from the first transmission frequency divider circuit 31, and sends the 1-bit signal to the driving unit 11. The driving unit 11 sends a differential signal over transmission paths TXOP and TXON to another device.

The first transmission frequency divider circuit 31 divides the frequency of a clock signal fb received from the PLL 30 of the clock unit 130 by two to generate a signal having a frequency of one-half of the frequency of the clock signal fb. The second transmission frequency divider circuit 32 divides the frequency of a signal received from the first transmission frequency divider circuit 31 by two to generate a signal having a frequency of one-quarter of the frequency of the clock signal fb. The third transmission frequency divider circuit 33 divides the frequency of a signal received from the second transmission frequency divider circuit 32 by two to generate a signal having a frequency of one-eighth of the frequency of the clock signal fb. The fourth transmission frequency divider circuit 34 divides the frequency of a signal received from the third transmission frequency divider circuit 33 by two to generate a signal having a frequency of one-sixteenth of the frequency of the clock signal fb.

The first receiver 121 includes an equalizer 15, a data determination unit 16, a latch unit 17, a 2:1 demultiplexer 25, a 4:2 demultiplexer 26, an 8:4 demultiplexer 27, and a 16:8 demultiplexer 28. The first receiver 121 also includes a first reception frequency divider circuit 35, a second reception frequency divider circuit 36, a third reception frequency divider circuit 37, and a fourth reception frequency divider circuit 38. The first receiver 121 also includes clock data recovery (CDR) 18 and an equalizer controller 19.

The equalizer 15 equalizes a high frequency component that has been degraded in the transmission paths RXIP and RXIN when a signal of the high frequency component has been sent over the transmission paths RXIP and RXIN from another device, and thereby corrects the signal that has been degraded in the transmission paths RXIP and RXIN. The data determination unit 16 determines whether the signal level of the signal equalized by the equalizer 15 is "0" or "1". The latch unit 17 latches the signal for which the determination has been made by the data determination unit 16, in response to a clock signal sent from the CDR 18, and sends the signal to the 2:1 demultiplexer 25.

The CDR 18 reproduces the timing of a clock signal used in another device from a signal sent therefrom, and interpolates a clock signal received from the PLL 30 of the clock unit 130 at the reproduced timing. The CDR 18 sends a clock signal fb that has been subjected to the interpolation to the latch unit 17 and the 2:1 demultiplexer 25. The equalizer controller 19 controls the equalizer 15 using signals received from the 16:8 demultiplexer 28 and the fourth receiving frequency divider circuit 38.

The 2:1 demultiplexer 25 converts the signal received from the data determination unit 16 into 2-bit signals in response to a clock signal output from the first reception frequency divider circuit 35, and sends the 2-bit signals to the 4:2 demultiplexer 26. The 4:2 demultiplexer 26 converts the signals received from the 2:1 demultiplexer 25 into 4-bit signals in response to a clock signal output from the second reception frequency divider circuit 36, and sends the 4-bit signals to the 8:4 demultiplexer 27. The 8:4 demultiplexer 27 converts the signals received from the 4:2 demultiplexer 26 into 8-bit signals in response to a clock signal output from the third reception frequency divider circuit 37, and sends the 8-bit signals to the 16:8 multiplexer 28. The 16:8 multiplexer 28 converts the signals received from the 8:4 demultiplexer 27 into 16-bit signals in response to a clock signal output from the fourth reception frequency divider circuit 38, and sends the signals to the core 500.

The first reception frequency divider circuit 35 divides the frequency of a clock signal fb subjected to interpolation in the CDR 18 by two to generate a signal having a frequency of one-half of the frequency of the clock signal fb subjected to the interpolation. The second reception frequency divider circuit 36 divides the frequency of a signal received from the first reception frequency divider circuit 35 by two to generate a signal having a frequency of one-quarter of the frequency of the clock signal fb subjected to interpolation in the CDR 18. The third reception frequency divider circuit 37 divides the frequency of a signal received from the second reception frequency divider circuit 36 by two to generate a signal having a frequency of one-eighth of the frequency of the clock signal fb subjected to interpolation in the CDR 18. The fourth reception frequency divider circuit 38 divides the frequency of a signal received from the third reception frequency divider circuit 37 by two to generate a signal having a frequency of one-sixteenth of the frequency of the clock signal fb subjected to interpolation in the CDR 18.

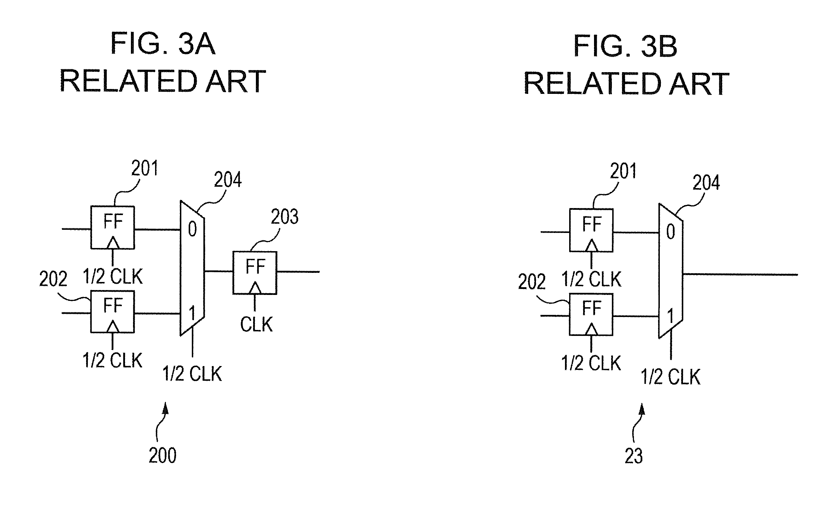

FIG. 3A is a circuit block diagram of a unit block of the 16:8 multiplexer 20, and FIG. 3B is an internal circuit block diagram of the 2:1 multiplexer 23.

The 16:8 multiplexer 20 includes eight unit blocks 200. Each unit block 200 includes a first latch circuit 201, a second latch unit 202, a third latch unit 203, and a data selection circuit 204. The first latch circuit 201 and the second latch unit 202 latch signals input to signal input terminals thereof in response to a clock signal for these signals. The clock signal for the signals input to the signal input terminals is a clock signal fb/16 sent from the fourth transmission frequency divider circuit 34. The third latch unit 203 latches signals sent from the data selection circuit 204 in response to a clock signal sent from the third transmission frequency divider circuit 33. The data selection circuit 204 alternately sends signals sent from the first latch circuit 201 and the second latch unit 202 to the third latch unit 203 in accordance with the signal levels of clock signals fb/16 sent from the fourth transmission frequency divider circuit 34. When the signal level of a signal sent from the fourth transmission frequency divider circuit 34 is "0", the data selection circuit 204 sends a signal sent from the first latch circuit 201 to the third latch unit 203. Otherwise, when the signal level of a signal sent from the fourth transmission frequency divider circuit 34 is "1", the data selection circuit 204 sends a signal sent from the second latch unit 202 to the third latch unit 203. Each of the unit blocks 200 of the 16:8 multiplexer 20 alternately outputs signals input to signal input terminals of the first latch circuit 201 and the second latch unit 202 in accordance with the signal levels of clock signals fb/16 sent from the fourth transmission frequency divider circuit 34.

Each of the 8:4 multiplexer 21 and the 4:2 multiplexer 22 has a configuration similar to that of the 16:8 multiplexer 20. The 8:4 multiplexer 21 includes four unit blocks 200, and the 4:2 multiplexer 22 includes two unit blocks 200. Each of the unit blocks 200 of the 8:4 multiplexer 21 alternately outputs signals input to the signal input terminals of the first latch circuit 201 and the second latch unit 202 in accordance with the signal levels of clock signals fb/8 sent from the third transmission frequency divider circuit 33. Each of the unit blocks 200 of the 4:2 multiplexer 22 alternately outputs signals input to the signal input terminals of the first latch circuit 201 and the second latch unit 202 in accordance with the signal levels of clock signals fb/4 sent from the second transmission frequency divider circuit 32.

The 2:1 multiplexer 23 differs from the unit blocks 200 of the 16:8 multiplexer 20, the 8:4 multiplexer 21, and the 4:2 multiplexer 22 in that the 2:1 multiplexer 23 does not have the third latch unit 203. The 2:1 multiplexer 23 alternately outputs signals input to the signal input terminals of the first latch circuit 201 and the second latch unit 202 in accordance with the signal levels of clock signals fb/2 sent from the first transmission frequency divider circuit 31.

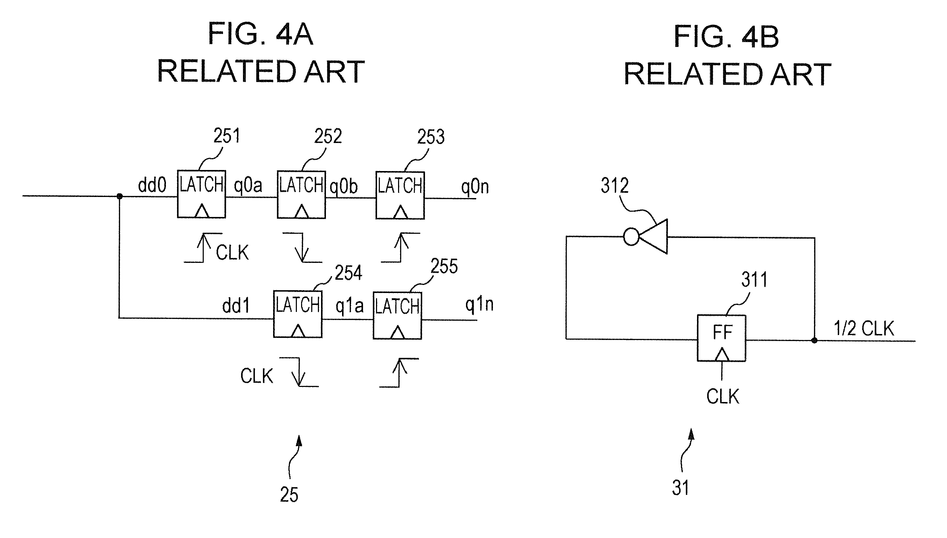

FIG. 4A is an internal circuit block diagram of the 2:1 demultiplexer 25, and FIG. 4B is an internal circuit block diagram of the first transmission frequency divider circuit 31.

The 2:1 demultiplexer 25 includes a first latch circuit 251, a second latch circuit 252, a third latch circuit 253, a fourth latch circuit 254, and a fifth latch circuit 255. The first latch circuit 251 latches a signal sent from the latch unit 17 in response to a rising edge of a clock signal fb/2 sent from the first reception frequency divider circuit 35, and sends the signal to the second latch circuit 252. The second latch circuit 252 latches the signal sent from the first latch circuit 251 in response to a falling edge of the clock signal fb/2 sent from the first reception frequency divider circuit 35, and sends the signal to the third latch circuit 253. The third latch circuit 253 latches the signal sent from the second latch circuit 252 in response to a rising edge of the clock signal fb/2 sent from the first reception frequency divider circuit 35, and outputs the signal. The fourth latch circuit 254 latches a signal sent from the latch unit 17 in response to a falling edge of the clock signal fb/2 sent from the first reception frequency divider circuit 35, and sends the signal to the fifth latch circuit 255. The fifth latch circuit 255 latches the signal sent from the fourth latch circuit 254 in response to a rising edge of the clock signal fb/2 sent from the first reception frequency divider circuit 35, and outputs the signal. The 2:1 demultiplexer 25 latches input signals in response to the clock signal fb/2 sent from the first reception frequency divider circuit 35, and outputs the input signals from the third latch circuit 253 and the fifth latch circuit 255.

Each of the 4:2 demultiplexer 26, the 8:4 demultiplexer 27, and the 16:8 demultiplexer 28 has a configuration similar to that of the 2:1 demultiplexer 25. The 4:2 demultiplexer 26 includes two 2:1 demultiplexers 25, the 8:4 demultiplexer 27 includes four 2:1 demultiplexers 25, and the 16:8 demultiplexer 28 includes eight 2:1 demultiplexers 25. The 4:2 demultiplexer 26 latches input signals in response to a clock signal fb/4 sent from the second reception frequency divider circuit 36, and outputs the input signals from the third latch circuit 253 and the fifth latch circuit 255. The 8:4 demultiplexer 27 latches input signals in response to a clock signal fb/8 sent from the third reception frequency divider circuit 37, and outputs the input signals from the third latch circuit 253 and the fifth latch circuit 255. The 16:8 demultiplexer 28 latches input signals in response to a clock signal fb/16 sent from the fourth reception frequency divider circuit 38, and outputs the input signals from the third latch circuit 253 and the fifth latch circuit 255.

The first transmission frequency divider circuit 31 includes a flip-flop 311 and an inversion element 312. The flip-flop 311 alternately outputs "0" and "1" from a data output terminal thereof in response to rising edges of a clock signal fb/2 received from the PLL 30. The inversion element 312 inputs an inverted signal of data output from the data output terminal of the flip-flop 311 to a signal input terminal of the flip-flop 311. Each of the second to fourth transmission frequency divider circuits 32 to 34 and the first to fourth reception frequency divider circuits 35 to 38 has the same configuration as the first transmission frequency divider circuit 31.

In the first lane 101, the 2:1 multiplexer 23, the driving unit 11, the equalizer 15, the data determination unit 16, the latch unit 17, the CDR 18, and the 2:1 demultiplexer 25 operate at high speed and therefore are formed in an analog power source area 90. Elements other than these elements are formed in a digital power source area 91 the power source of which is isolated from the power source of the analog power source area 90. Elements that operate at high speed are formed in the analog power source area 90, so that both of reduction in the amount of jitter and operations at high frequencies are achieved. Meanwhile, other elements are formed in the digital power source area 91, so that a large-scale circuit, such as the equalizer controller 19, may be formed in a small area and reduced power consumption may be achieved.

Each of the second lane 102, the third lane 103, and the fourth lane 104 has the same configuration and function as the first lane 101.

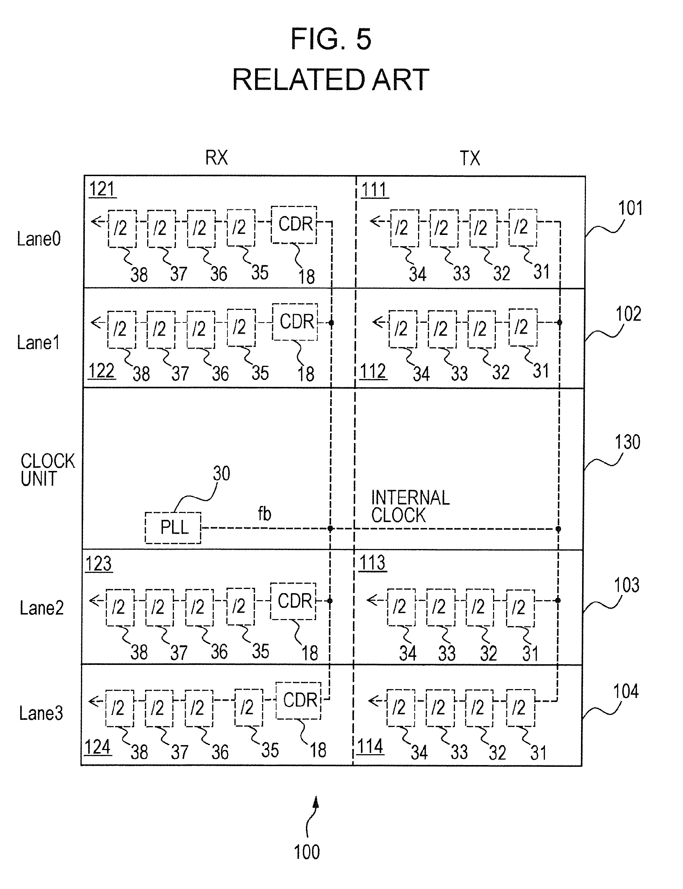

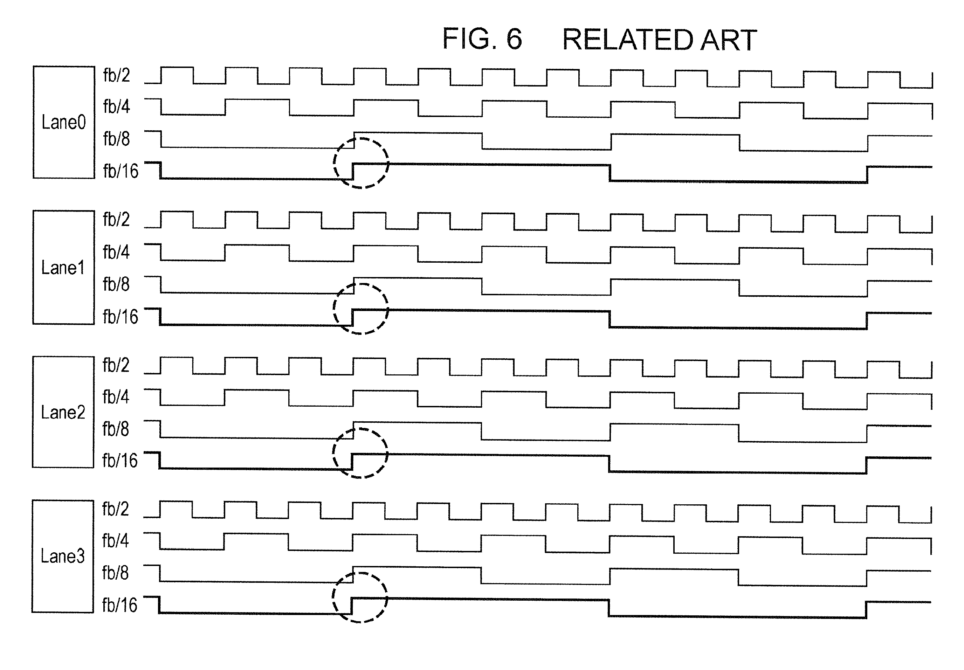

FIG. 5 is a circuit block diagram including wiring for the clock signals of the SerDes 100, and FIG. 6 is a diagram illustrating timing charts of clock signals of the first to fourth receivers 121 to 124 of the SerDes 100. In FIG. 5, elements that are not directly relevant to wiring for clock signals are omitted. In addition, in FIG. 6, a clock signal fb/2 represents a signal obtained by dividing the frequency of a clock signal fb by two, and a clock signal fb/4 represents a signal obtained by dividing the frequency of a clock signal fb by four. Also, a clock signal fb/8 represents a signal obtained by dividing the frequency of a clock signal fb by eight, and a clock signal fb/16 represents a signal obtained by dividing the frequency of a clock signal fb by sixteen. In other words, the clock signal fb/2 represents a signal sent from the first reception frequency divider circuit 35, and the clock signal fb/4 represents a signal sent from the second reception frequency divider circuit 36. Also, the clock signal fb/8 represents a signal sent from the third reception frequency divider circuit 37, and the clock signal fb/16 represents a signal sent from the fourth reception frequency divider circuit 38. In addition, time points indicated by broken-line circles in FIG. 6 represent timings at which clock signals fb/16 sent from the fourth reception frequency divider circuits 38 of the first to fourth receivers 121 to 124 rise.

Since clock signals reproduced by the CDRs 18 are directly supplied to the first reception frequency divider circuits 35 of the first to fourth receivers 121 to 124, respectively, there is a possibility that elements of the first to fourth receivers 121 to 124 will operate simultaneously. In particular, when a large-scale circuit, such as the equalizer controller 19, operates in synchronization with a clock signal fb/16 sent from the fourth reception frequency divider circuit 38, there is a possibility that large simultaneous switching noise will occur. Although the power sources of the analog power source area 90 and the digital power source area 91 are isolated from each other so as to inhibit power source noise that has occurred in the digital power source area 91 from being transmitted to the analog power source area 90, there is a possibility that large simultaneous switching noise will be transmitted to the adjacent analog power source area 90. If simultaneous switching noise is transmitted to the adjacent analog power source area 90, jitter might occur in an element formed in the analog power source area 90, thereby degrading the transmission characteristics of the SerDes 100, which, in turn, degrades the bit error rate (BDR), resulting in an error in operation. In addition, clock signals generated in the PLL 30 are directly supplied to the first transmission frequency divider circuits 31 of the first to fourth senders 111 to 114, and parallel signals sent from the FIFO 520 operate based on a synchronous clock. Therefore, elements of the first to fourth senders 111 to 114 operate simultaneously, leading to a possibility of occurrence of large simultaneous switching noise in the digital power source area 91.

As such, a SerDes including a plurality of lanes has a problem in that simultaneous switching noise that may occur when elements included in the plurality of lanes operate simultaneously is to be inhibited.

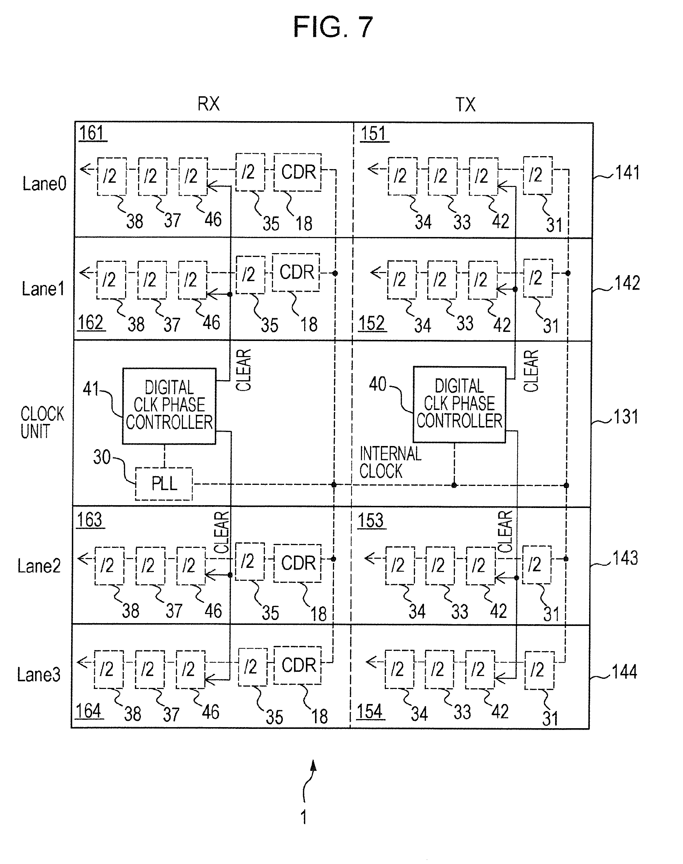

FIG. 7 is a circuit block diagram including wiring for clock signals of a SerDes according to a first embodiment. In FIG. 7, elements that are not directly relevant to wiring for clock signals are omitted.

A SerDes 1 differs from the SerDes 100 described earlier in that the SerDes 1 includes first to fourth lanes 141 to 144 in place of the first to fourth lanes 101 to 104. The SerDes 1 also differs from the SerDes 100 in that the SerDes 1 includes a clock unit 131 in place of the clock unit 130. The first to fourth lanes 141 to 144 include first to fourth senders 151 to 154 and first to fourth receivers 161 to 164, respectively. The first to fourth senders 151 to 154 differ from the first to fourth senders 111 to 114 in that the first to fourth senders 151 to 154 include second transmission frequency divider circuits 42 in place of the second transmission frequency divider circuits 32, respectively. In addition, the first to fourth receivers 161 to 164 differ from the first to fourth receivers 121 to 124 in that the first to fourth receivers 161 to 164 include second reception frequency divider circuits 46 in place of the second reception frequency divider circuits 36, respectively. The clock unit 131 differs from the clock unit 130 in that the clock unit 131 includes a transmission clock phase controller 40 and a reception clock phase controller 41.

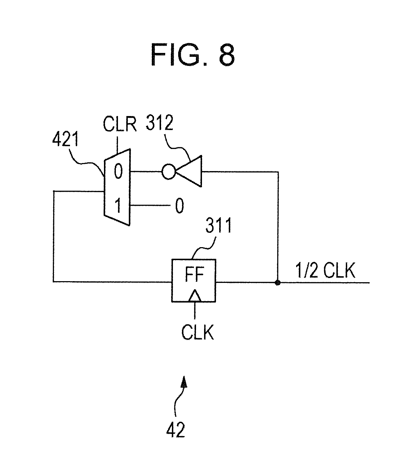

FIG. 8 is an internal circuit block diagram of the second transmission frequency divider circuit 42.

The second transmission frequency divider circuit 42 differs from the first to fourth transmission frequency divider circuits 31 to 34 and the first to fourth reception frequency divider circuits 35 to 38 in that the second transmission frequency divider circuit 42 includes a data selection circuit 421. When the signal level of a clear signal from the transmission clock phase controller 40 is "1", the data selection circuit 421 outputs "0". Otherwise, when the signal level of a clear signal from the transmission clock phase controller 40 is "0", the data selection circuit 421 outputs an output signal of the inversion element 312. The second reception frequency divider circuit 46 has the same configuration as the second transmission frequency divider circuit 42.

The transmission clock phase controller 40 and the reception clock phase controller 41 generate clear signals at predetermined timings during initialization of the SerDes 1, respectively.

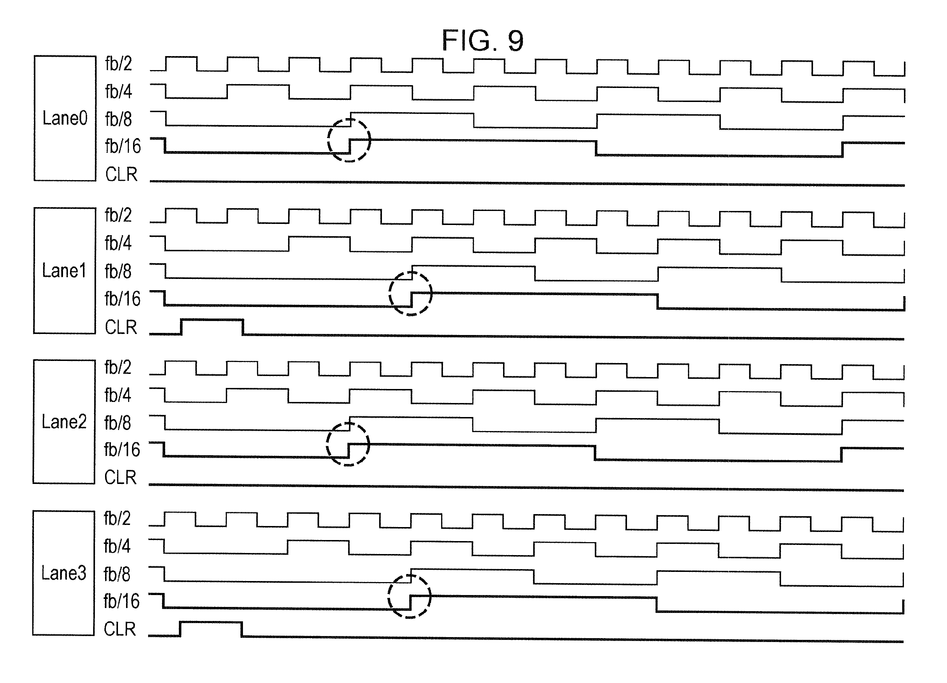

FIG. 9 is a diagram illustrating timing charts of clock signals of the SerDes 1. In FIG. 9, a clock signal fb/2 represents a signal obtained by dividing the frequency of a clock signal fb by two, and a clock signal fb/4 represents a signal obtained by dividing the frequency of a clock signal fb by four. Also, a clock signal fb/8 represents a signal obtained by dividing the frequency of a clock signal fb by eight, and a clock signal fb/16 represents a signal obtained by dividing the frequency of a clock signal fb by sixteen. In other words, the clock signal fb/2 represents a signal sent from the first reception frequency divider circuit 35, and the clock signal fb/4 represents a signal sent from the second reception frequency divider circuit 46. Also, the clock signal fb/8 represents a signal sent from the third reception frequency divider circuit 37, and the clock signal fb/16 represents a signal sent from the fourth reception frequency divider circuit 38. In addition, in FIG. 9, signals CLR represent clear signals sent from the reception clock phase controller 41 to the second reception frequency divider circuits 46 of the first to fourth receivers 161 to 164. In addition, time points indicated by broken-line circles in FIG. 9 represent timings at which clock signals fb/16 sent from the fourth reception frequency divider circuits 38 of the first to fourth receivers 161 to 164 rise, respectively.

The reception clock phase controller 41 does not send a clear signal having a signal level of "0" to the second reception frequency divider circuit 46 of each of the first and third receivers 161 and 163. Meanwhile, the reception clock phase controller 41 sends a clear signal having a signal level of "1" to the second reception frequency divider circuit 46 of each of the second and fourth receivers 162 and 164. Once the second reception frequency divider circuit 46 of each of the second and fourth receivers 162 and 164 receives the clear signal having a signal level of "1", the data selection circuit 421 sends a signal having a signal level of "0" to a signal input terminal of the flip-flop 311. While the signal having a signal level of "0" is being input to the signal input terminal, the flip-flop 311 continues to output a signal having a signal level of "0". If the flip-flop 311 continues to output the signal having a signal level of "0", the phase of a clock signal fb/4 output from the second reception frequency divider circuit 46 of each of the second and fourth receivers 162 and 164 is shifted.

The second reception frequency divider circuit 46 of each of the second and fourth receivers 162 and 164 receives a clear signal having a signal level of "1" at a timing when a clock signal fb/4 is to rise, and thereby the phase of the output clock signal is shifted. The phase of the clock signal fb/4 output from the second reception frequency divider circuit 46 of each of the second and fourth receivers 162 and 164 is shifted, and thereby differs from the phase of a clock signal fb/4 output from the second reception frequency divider circuit 46 of each of the first and third receivers 161 and 163. The phases of the signals of the second reception frequency divider circuits 46 of the second and fourth receivers 162 and 164 differ from the phases of the signals of the adjacent first and third receivers 161 and 163, respectively, and thereby the phases of clock signals fb/16 of receivers adjacent to each other are different. The phases of clock signals fb/16 of receivers adjacent to each other are different, and thereby the timings of signals that operate with the clock signals fb/16 are different. This suppresses the magnitude of simultaneous switching noise.

In addition, the transmission clock phase controller 40 does not send a clear signal having a signal level of "1" to the second transmission frequency divider circuit 42 of each of the first and third senders 151 and 153. Meanwhile, the transmission clock phase controller 40 sends a clear signal having a signal level of "0" to the second transmission frequency divider circuit 42 of each of the second and fourth senders 152 and 154. Different clear signals are sent to senders adjacent to each other at the time of initialization of the SerDes 1, and thereby the phases of clock signals fb/16 of senders adjacent to each other are different. The phases of clock signals fb/16 of senders adjacent to each other, and thereby timings of signals that operate with the clock signals fb/16 are different. This suppresses the magnitude of simultaneous switching noise.

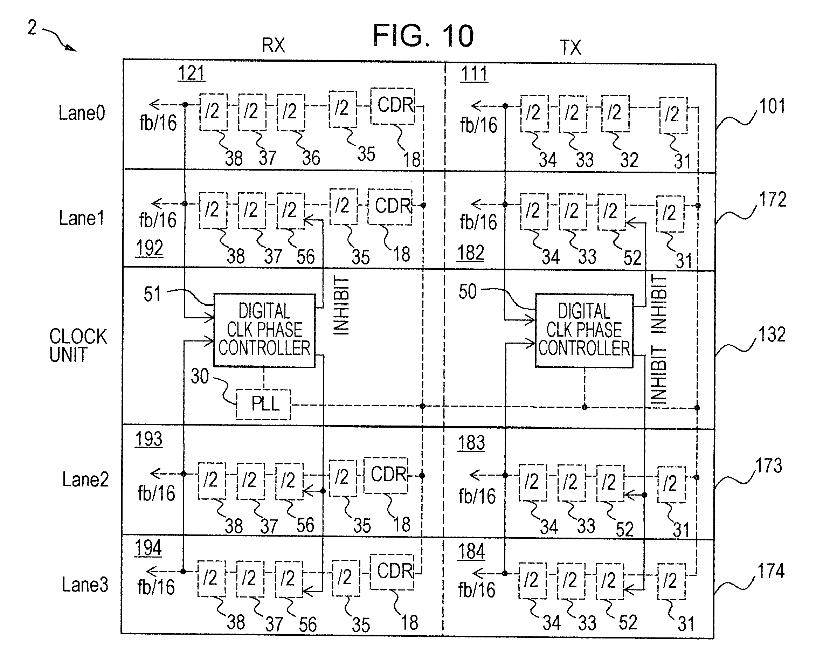

FIG. 10 is a circuit block diagram including wiring for clock signals of a SerDes according to a second embodiment. In FIG. 10, elements that are not directly relevant to wiring for clock signals are omitted.

A SerDes 2 differs from the SerDes 100 described earlier in that the SerDes 2 includes second to fourth lanes 172 to 174 in place of the second to fourth lanes 102 to 104. The SerDes 2 also differs from the SerDes 100 in that the SerDes 2 includes a clock unit 132 in place of the clock unit 130. The second to fourth lanes 172 to 174 include second to fourth senders 182 to 184 and second to fourth receivers 192 to 194, respectively. The second to fourth senders 182 to 184 differ from the second to fourth senders 112 to 114 in that the second to fourth senders 182 to 184 include second transmission frequency divider circuits 52 in place of the second transmission frequency divider circuits 32, respectively. Also, the second to fourth receivers 192 to 194 differ from the second to fourth receivers 122 to 124 in that the second to fourth receivers 192 to 194 include second reception frequency divider circuits 56 in place of the second reception frequency divider circuits 36, respectively. The clock unit 132 differs from the clock unit 130 in that the clock unit 132 includes a transmission clock phase controller 50 and a reception clock phase controller 51.

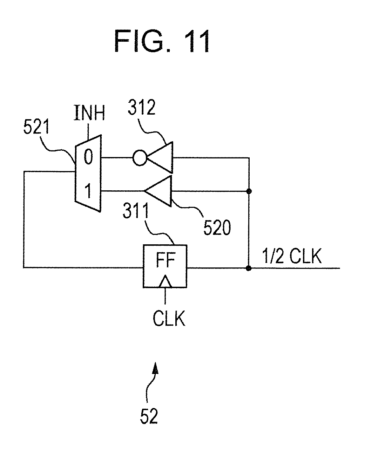

FIG. 11 is an internal circuit block diagram of the second transmission frequency divider circuit 52.

The second transmission frequency divider circuit 52 differs from the first to fourth transmission frequency divider circuits 31 to 34 and the first to fourth reception frequency divider circuits 35 to 38 in that the second transmission frequency divider circuit 52 includes a buffer element 520 and a data selection circuit 521. The buffer element 520 buffers data output from a data output terminal of the flip-flop 311 and inputs the data to a signal input terminal of the flip-flop 311 in such a manner that the data is not inverted. When the data selection circuit 521 receives an inhibit signal having a signal level of "1" from the transmission clock phase controller 50, the data selection circuit 521 outputs an output signal of the buffer element 520. Otherwise, when the data selection circuit 521 receives an inhibit signal having a signal level of "0" from the transmission clock phase controller 50, the data selection circuit 521 outputs an output signal of the inversion element 312. While receiving an inhibit signal having a signal level of "1", the second transmission frequency divider circuit 52 maintains a divided clock signal at a certain value. The second reception frequency divider circuit 56 has the same configuration as the second transmission frequency divider circuit 52.

The transmission clock phase controller 50 and the reception clock phase controller 51 generate inhibit signals at predetermined timings during initialization of the SerDes 2, respectively. The transmission clock phase controller 50 includes a phase signal capture unit 501 and a phase signal comparison unit 502.

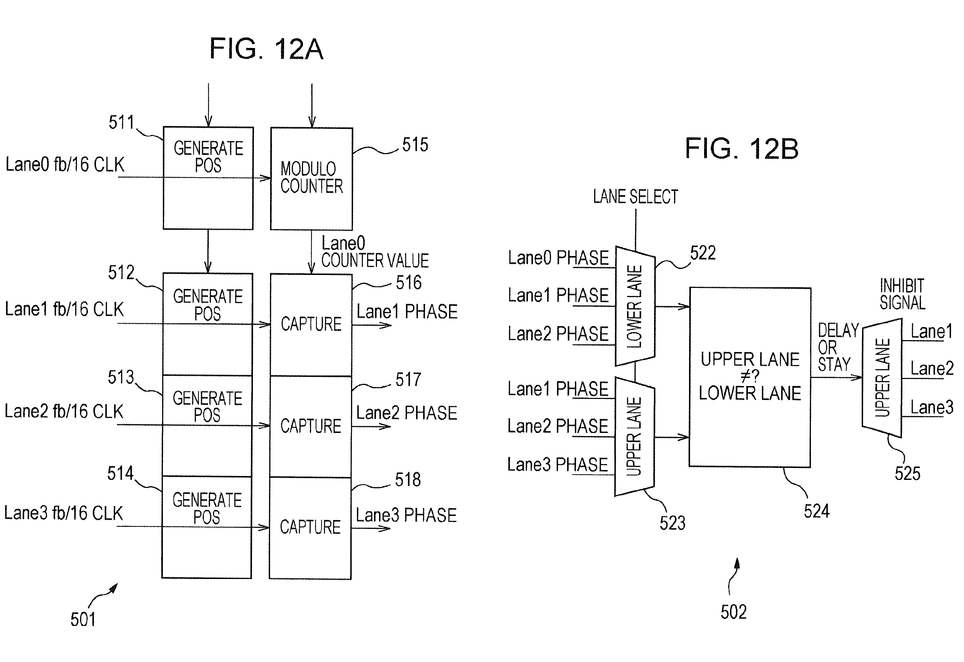

FIG. 12A is an internal circuit block diagram of the phase signal capture unit 501, and FIG. 12B is an internal circuit block diagram of the phase signal comparison unit 502.

The phase signal capture unit 501 includes first to fourth reference signal generators 511 to 514 and first to fourth modulo counters 515 to 518. The first to fourth reference signal generators 511 to 514 generate reference signals POS from clock signals fb/16 output from the fourth transmission frequency divider circuits 34 of the first to fourth senders 111 and 182 to 184 and signals obtained by shifting the clock signals fb/16, respectively. Each of the first to fourth modulo counters 515 to 518 repeatedly counts the rising edges of the clock signal fb/2 one by one from 0 to 7. Each of the first to fourth modulo counters 515 to 518 also captures a count value at the time of generation of a reference signal POS, and sends the captured count value to the phase signal comparing element 502.

The phase signal comparison unit 502 includes a lower lane count value acquisition unit 522, an upper lane count value acquisition unit 523, a lane count value comparison unit 524, and an inhibit signal generator 525.

The lower lane count value acquisition unit 522 acquires and stores count values corresponding to count signals received from the first modulo counter 515, the second modulo counter 516, and the third modulo counter 517. The upper lane count value acquisition unit 523 acquires and stores count values corresponding to count signals received from the second modulo counter 516, the third modulo counter 517, and the fourth modulo counter 518.

The lane count value comparison unit 524 compares count values respectively stored in the lower lane count value acquisition unit 522 and the upper lane count value acquisition unit 523. The lane count value comparison unit 524 compares the count value of the first modulo counter 515 stored in the lower lane count value acquisition unit 522 with the count value of the second modulo counter 516 stored in the upper lane count value acquisition unit 523. The lane count value comparison unit 524 compares the count value of the second modulo counter 516 stored in the lower lane count value acquisition unit 522 with the count value of the third modulo counter 517 stored in the upper lane count value acquisition unit 523. The lane count value comparison unit 524 compares the count value of the third modulo counter 517 stored in the lower lane count value acquisition unit 522 with the count value of the fourth modulo counter 518 stored in the upper lane count value acquisition unit 523.

Based on the comparison results of the lane count value comparison unit 524, the inhibit signal generator 525 generates second to fourth lane inhibit signals whose signal levels are "1", over a predetermined period. When the count value of the first modulo counter 515 in the lower lane count value acquisition unit 522 matches the count value of the second modulo counter 516 in the upper lane count value acquisition unit 523, the inhibit signal generator 525 generates a second lane inhibit signal. When the count value of the second modulo counter 516 in the lower lane count value acquisition unit 522 matches the count value of the third modulo counter 517 in the upper lane count value acquisition unit 523, the inhibit signal generator 525 generates a third lane inhibit signal. When the count value of the third modulo counter 517 in the lower lane count value acquisition unit 522 matches the count value of the fourth modulo counter 518 in the upper lane count value acquisition unit 523, the inhibit signal generator 525 generates a fourth lane inhibit signal.

The reception clock phase controller 51 has the same configuration as the transmission clock phase controller 50.

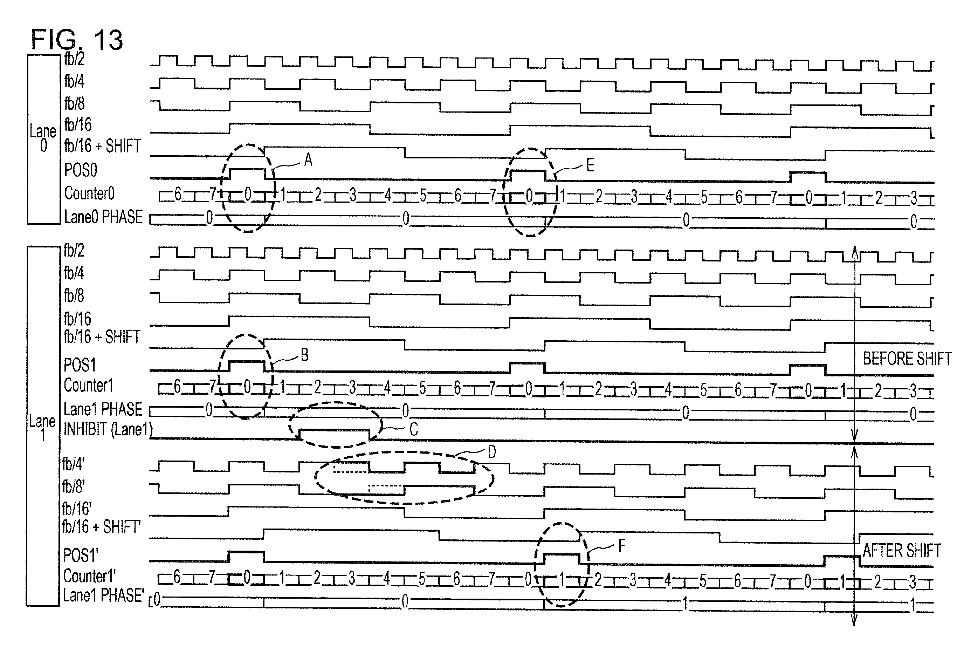

FIG. 13 is a diagram illustrating timing charts of clock signals of the SerDes 2. In FIG. 13, a clock signal fb/2 represents a signal obtained by dividing the frequency of a clock signal fb by two, and a clock signal fb/4 represents a signal obtained by dividing the frequency of a clock signal fb by four. Also, a clock signal fb/8 represents a signal obtained by dividing the frequency of a clock signal fb by eight, and a clock signal fb/16 represents a signal obtained by dividing the frequency of a clock signal fb by sixteen. In other words, the clock signal fb/2 represents a signal sent from the first reception frequency divider circuit 35, and the clock signal fb/4 represents a signal sent from the second reception frequency divider circuit 56. Also, the clock signal fb/8 represents a signal sent from the third reception frequency divider circuit 37, and the clock signal fb/16 represents a signal sent from the fourth reception frequency divider circuit 38. In addition, in FIG. 13, a signal fb/16 + Shift represents a signal obtained by shifting a clock signal fb/16 by the period of a clock signal fb/2. In addition, in FIG. 13, a signal POS 0 represents the reference signal POS of the first receiver 121 generated from the clock signal fb/16 and the signal fb/16 + Shift, and a signal Counter 0 represents the count value of the first modulo counter 515. Also, in FIG. 13, a signal POS 1 represents the reference signal POS of the second receiver 192 generated from the clock signal fb/16 and the signal fb/16 + Shift, and a signal Counter 1 represents the count value of the second modulo counter 516. In addition, a signal Inhibit (Lane 1) of Lane 1 represents a second lane inhibit signal generated in the inhibit signal generator 525. In addition, a signal fb/4', a signal fb/8', a signal fb/16', a signal fb/16 + Shift', a signal POS 1', and a signal Counter 1' of Lane 1 represent values after a shift operation of the second lane 172.

The count value of the first modulo counter 515 at a position of a broken-line ellipse indicated by an arrow A in FIG. 13 is "0", and the first reference signal generator 511 generates the reference signal POS 0, and therefore the lower lane count value acquisition unit 522 stores the count value "0". Also, the count value of the second modulo counter 516 at a position of a broken-line ellipse indicated by an arrow B in FIG. 13 is "0", and the second reference signal generator 512 generates the reference signal POS 1, and therefore the lower lane count value acquisition unit 522 stores the count value "0". The lane count value comparison unit 524 compares the count value "0" stored in the lower lane count value acquisition unit 522 with the count value "0" stored in the upper lane count value acquisition unit 523, and determines that both of the count values match. Since the lane count value comparison unit 524 determines that the count values stored in the lower lane count value acquisition unit 522 and the upper lane count value acquisition unit 523 match, the inhibit signal generator 525 generates a second lane inhibit signal. The second lane inhibit signal generated is positioned in an ellipse indicated by an arrow C in FIG. 13. Once the second lane inhibit signal is generated and is sent to the second reception frequency divider circuit 56, the second reception frequency divider circuit 56 is inhibited while receiving the second lane inhibit signal, and the phase of an output signal fb/4 of the second reception frequency divider circuit 56 is shifted. At a position of a broken-line ellipse indicated by an arrow D in FIG. 13, the second reception frequency divider circuit 56 is inhibited, and the phase of a clock signal fb/4 of the second reception frequency divider circuit 56 is shifted. The phase of the clock signal fb/4 of the second reception frequency divider circuit 56 is shifted, and thereby the phases of the clock signal fb/16 of the first receiver 121 and the clock signal fb/16' of the second receiver 192 positioned at ellipses indicated by arrows E and F, respectively, in FIG. 13 are shifted with respect to each other.

Similarly, the phases of clock signals fb/16 of the second receiver 192 and the third receiver 193 are compared. If the phases of clock signals fb/16 of the second receiver 192 and the third receiver 193 match, the phase of the clock signal fb/4 of the third receiver 193 is shifted, so that the phases of clock signals fb/16 of the second receiver 192 and the third receiver 193 are shifted with respect to each other. Subsequently, the phases of clock signals fb/16 of the third receiver 193 and the fourth receiver 194 are compared. If the phases of clock signals fb/16 of the third receiver 193 and the fourth receiver 194 match, the phase of the clock signal fb/4 of the fourth receiver 194 is shifted, so that the phases of clock signals fb/16 of the third receiver 193 and the fourth receiver 194 are shifted with respect to each other.

In addition, the phases of clock signals fb/16 of the first sender 111 and the second sender 182 are compared similarly. If the phases of clock signals fb/16 of the first sender 111 and the second sender 182 match, the phase of the clock signal fb/4 of the second sender 182 is shifted, so that the phases of clock signals fb/16 of the first sender 111 and the second sender 182 are shifted with respect to each other. Subsequently, the phases of clock signals fb/16 of the second sender 182 and the third sender 183 are compared. If the phases of clock signals fb/16 of the second sender 182 and the third sender 183 match, the phase of the clock signal fb/4 of the third sender 183 is shifted, so that the phases of clock signals fb/16 of the second sender 182 and the third sender 183 are shifted with respect to each other. Subsequently, the phases of clock signals fb/16 of the third sender 183 and the fourth sender 184 are compared. If the phases of clock signals fb/16 of the third sender 183 and the fourth sender 184 match, the phase of the clock signal fb/4 of the fourth sender 184 is shifted, so that the phases of clock signals fb/16 of the third sender 183 and the fourth sender 184 are shifted with respect to each other.

In the SerDes 2, the transmission clock phase controller 50 determines whether the phases of output signals fb/16 of the fourth transmission frequency divider circuits 34 of senders adjacent to each other match, and, based on the determination result, determines whether to shift the phases of the clock signals fb/16 with respect to each other. Also, in the SerDes 2, the reception clock phase controller 51 determines whether the phases of output signals fb/16 of the fourth reception frequency divider circuits 38 of receivers adjacent to each other match, and, based on the determination result, determines whether to shift the phases of the clock signals fb/16 with respect to each other. In the SerDes 2, since the phases of the clock signals of receivers adjacent to each other are compared, it is possible to shift the phases of clock signals of these receivers with respect to each other, even when the clock signals of these receivers are asynchronous because of an element delay between internal elements, or a wiring delay between wiring lines for elements, in a receiver.

Although each of the SerDes 1 and the SerDes 2 has four lanes, a SerDes may have two or three lanes, or five or more lanes. Also, although the phase of a clock signal fb/16 is shifted by shifting the phase of a clock signal fb/4 in the SerDes 1 and the SerDes 2, the phase of a clock signal fb/2 or a clock signal fb/8 may be shifted. Also, although the parallel signal at the final stage is controlled using a clock signal fb/16, which is obtained by dividing a clock signal fb by sixteen, in the SerDes 1 and the SerDes 2, the parallel signal at the final stage may be controlled using a clock signal obtained by dividing the clock signal fb by four, eight, or thirty-two. Also, although each of the SerDes 1 and the SerDes 2 has a transmission clock phase controller and a reception clock phase controller, a configuration in which the phases of clock signals of a sender and a receiver are shifted by a single clock phase controller may be employed. Also, the SerDes 1 and the SerDes 2 may be mounted on various information processing devices.

In addition, in the SerDes 1, without determining whether the phases of output signals fb/16 of the fourth transmission frequency divider circuits 34 of senders adjacent to each other match, the transmission clock phase controller 40 and the reception clock phase controller 41 send clear signals. However, the configuration may be such that the transmission clock phase controller 40 and the reception clock phase controller 41 send clear signals after a determination has been made as to whether the phases of output signals fb/16 of the fourth transmission frequency divider circuits 34 of senders adjacent to each other match.

Also, although, in the SerDes 1, a rising edge of the flip-flop 311 is cleared by sending a clear signal to the data selection circuit 421, a flip-flop having a reset terminal may be arranged instead of the flip-flop 311. In this case, a rising edge is cleared by inputting a clear signal to the reset terminal of the flip-flop.

In addition, although, in each of the SerDes 1 and the SerDes 2, the phases of clock signals fb/16 of the senders and receivers are different between lanes adjacent to each other, the phases of clock signals fb/16 of the senders and receivers may be made different between lanes that are not adjacent to each other. For example, the phases of clock signals fb/16 of senders and receivers may be made different between the first lane and the third lane.

## Claims

1. A communication circuit comprising:
a plurality of receiving units each configured to receive a serial signal over a transmission path from another device;
a plurality of serial-to-parallel converters each configured to convert the received serial signal into a parallel signal; and
a clock phase controller configured to send a clock phase control signal to any of the plurality of serial-to-parallel converters,
wherein one of the serial-to-parallel converters that has received the clock phase control signal is configured to shift a phase of a parallel-signal clock signal that is to be used for a parallel signal obtained by conversion, so that a phase of a parallel signal to be obtained by conversion performed by the one of the serial-to-parallel converters is different from a phase of a parallel signal to be obtained by conversion performed by another one of the serial-to-parallel converters.

2. The communication circuit according to claim 1,
wherein the one of the serial-to-parallel converters includes a parallel-signal clock signal generator configured to divide a frequency of a clock signal so as to generate a divided clock signal and to further divide a frequency of the divided clock signal so as to generate a parallel-signal clock signal that is to be used for the parallel signal, and
wherein the one of the serial-to-parallel converters is configured to adjust a phase of the divided clock signal and thereby shift a phase of a parallel-signal clock signal that is to be used for a parallel signal obtained by conversion.

3. The communication circuit according to claim 2,
wherein the one of the serial-to-parallel converters is configured to clear the divided clock signal and thereby shift a phase of a parallel-signal clock signal that is to be used for a parallel signal obtained by conversion.

4. The communication circuit according to claim 2,
wherein the one of the serial-to-parallel converters is configured to maintain the divided clock signal at a certain value, while receiving the clock phase control signal, and thereby shift a phase of a parallel-signal clock signal that is to be used for a parallel signal obtained by conversion.

5. The communication circuit according to any one of claims 1 to 4,
wherein the clock phase controller is configured to send the clock phase control signal upon determining that a phase of a parallel signal to be obtained by conversion performed by the one of the serial-to-parallel converters matches a phase of a parallel signal to be obtained by conversion performed by another one of the serial-to-parallel converters.

6. The communication circuit according to claim 5,
wherein the clock phase controller includes a modulo counter configured to count the number of counts used for determining a phase of a parallel-signal clock signal, and
wherein the clock phase controller is configured to send the clock phase control signal upon determining that the number of counts counted for the one of the serial-to-parallel converters matches the number of counts counted for another one of the serial-to-parallel converters.

7. The communication circuit according to any one of claims 1 to 6, wherein the other one of the serial-to-parallel converters is a serial-to-parallel converter adjacent to the one of the serial-to-parallel converters.

8. The communication circuit according to any one of claims 1 to 7, further comprising:
a plurality of parallel-to-serial converters each configured to convert a parallel signal into a serial signal; and
a plurality of sending units each configured to send the serial signal over a transmission path to another device;
wherein the clock phase controller is configured to send a clock phase control signal to any of the plurality of parallel-to-serial converters, and
wherein one of the parallel-to-serial converters that has received the clock phase control signal is configured to shift a phase of a parallel-signal clock signal that is to be used for a parallel signal to be converted, so that a phase of a parallel signal to be converted by the one of the parallel-to-serial converters is different from a phase of a parallel signal to be converted by another one of the parallel-to-serial converters.

9. An information processing device comprising a communication circuit, the communication circuit comprising:
a plurality of receiving units each configured to receive a serial signal over a transmission path from another device;
a plurality of serial-to-parallel converters each configured to convert the received serial signal into a parallel signal;
a plurality of parallel-to-serial converters each configured to convert a parallel signal into a serial signal;
a plurality of sending units each configured to send the serial signal over a transmission path to another device; and
a clock phase controller configured to send a clock phase control signal to any of the plurality of serial-to-parallel converters and to send the clock phase control signal to any of the plurality of parallel-to-serial converters,
wherein one of the serial-to-parallel converters that has received the clock phase control signal is configured to shift a phase of a parallel-signal clock signal that is to be used for a parallel signal obtained by conversion, so that a phase of a parallel signal to be obtained by conversion performed by the one of the serial-to-parallel converters is different from a phase of a parallel signal to be obtained by conversion performed by another one of the serial-to-parallel converters, and
wherein one of the parallel-to-serial converters that has received the clock phase control signal is configured to shift a phase of a parallel-signal clock signal that is to be used for a parallel signal to be converted, so that a phase of a parallel signal to be converted by the one of the serial-to-parallel converters is different from a phase of a parallel signal to be converted by another one of the serial-to-parallel converters.
